# EUROPEAN PATENT APPLICATION

(11) **EP 1 580 474 A1**
(43) Date of publication of application: **28.09.2005**
(21) Application number: 04425209.6
(22) Date of filing: 25.03.2004
(51) Int. Cl.: F16L 11/08, B32B 27/00

(54) **Multi-layer-hose**

(71) Applicant: MANIFATTURA TUBI GOMMA S.p.A., 36040 Grisignano di Zocco (Vicenza) (IT)
(72) Inventor: Marcolin, Pietro, 35020 Due Carrare (IT)
(74) Representative: Lanzoni, Luciano

(57) **Abstract**

A hose for conveying fluids comprises a plurality of concentric layers (2), one inner layer (3) forming a duct (3a) for a fluid to be conveyed, and at least one protective and reinforcing outer layer (5) mounted on the outside of the inner layer (3), in which the inner layer (3) is at least partly pigmented and is made chiefly of a perfluorinated polymer, with the exception of MFA and PFA. The hose (1) also comprises at least one adhesive (6) placed between the outer layer (5) and the inner layer (3). The present invention also relates to a method for production of the hose (1), comprising the steps of subjecting an outer surface (4) of the inner layer (3) to an etching process, then applying an adhesive (6) to the outer surface (4), and covering the outer surface (4) with at least one outer layer (5). The etching process occurs by at least partial defluorination of the outer surface (4) of the inner layer (3).

## Description

The present invention relates to a hose for conveying fluids and to a method for the production of the hose.

In many sectors, composite multi-layer hoses are used to convey a fluid from a supply source to filling devices which fill containers with the fluid. The containers are then put on sale.

For example, widespread use is made of such hoses in the pharmaceutical, cosmetics and food sectors.

At the same time, similar hoses are also used in other apparatuses in which fluids must be conveyed. At present the hoses consist of an inner layer which forms the duct for passage of the fluid, and one or more outer layers covering the inner layer and integral with it.

The outer layers may typically be made of fabric, rubber, metal stiffening and/or protective spirals, various filler materials, etc.

Depending on the applications, one or more of the layers of which the hose consists may or may not be made of a conductive material, so as to discharge any electrostatic charges which may be released due to the passage of the fluid. This solution is required when the hoses are intended for use in environments in which inflammable and/or explosive materials are present, or when the fluid to be conveyed is inflammable and/or explosive.

The inner layer is currently made of silicone, or fluorinated polymers, and its thickness may vary between 1 and 2 mm.

In many applications (in particular in the above-mentioned sectors) the inner duct for passage of the fluid has to be white in colour, whilst in other applications it has to have a conductive black colour.

For the white colour, the requirement is well met by ducts with a thickness of more than 1 mm made of fluorinated materials which are translucent by nature. Given the significant thickness, the duct appears to have a white colour.

Until now, the choice of thicknesses of 1 or 2 mm has been dictated by mechanical reasons, since ducts with sufficient mechanical strength could not be made any less thick.

Hoses of the type described above are produced starting with the inner duct, the outside of which is firstly subjected to a process called etching to increase its "roughness" (in this case understood to be at molecular rather than macroscopic level), then covered with a product which acts as an adhesive and adheres to the "rough" outer surface of the inner layer.

The outer layers are then applied in succession, according to the requirements dictated by the intended use of the hoses.

However, this known type of hoses has the significant disadvantage of a high level of mechanical stiffness, due chiefly to the considerable thickness of the inner duct, which substantially prevents the hose from bending.

As a result, such hoses cannot be used with moving devices, such as in some cases the filling heads of filling machines.

Technologies have recently been developed which allow hoses to be obtained which have an inner duct made of a perfluorinated material (such as FEP and PVDF) with reduced thickness but a very high level of mechanical strength.

Since such materials are, as already indicated, translucent, when the thickness of the inner ducts is reduced, the latter become transparent enough to take on the colour of whatever covers them.

Considering that, to allow the outer layers to adhere to the inner duct, the latter must be subjected to an etching process which makes it possible for an adhesive to subsequently adhere on the duct, and considering that etching gives the outer surface of the material a dark colour, the inner ducts of hoses made in accordance with the above method have a dark colour.

As a result, they would always have to be pigmented during production of the hoses to obtain hoses with different colours.

However, at present no effective etching operation is known which can be performed on pigmented perfluorinated elements, and so it is impossible to produce multi-layer hoses which have both a coloured inner duct and good mechanical flexibility (the latter can only be obtained with good adhesion to the rest of the structure).

European patent application 03425111.6 in the name of the Applicant describes multi-layer hoses with pigmented inner ducts made of MFA and PFA.

In this situation, the technical need which forms the basis of the present invention is the production of a multi-layer hose for conveying fluids which overcomes the above-mentioned disadvantages.

In particular, the technical need of the present invention is the production of a multi-layer hose for conveying fluids which has good flexibility, but in which the inner duct is also pigmented.

A further technical need of the present invention is to provide a method for the production of multi-layer hoses for conveying fluids which has none of the above-mentioned disadvantages.

Another technical need of the present invention is to provide a method for the production of multi-layer hoses which have good flexibility, but in which the inner duct is pigmented.

The technical need specified and the aims indicated are substantially achieved by a hose for conveying fluids and a method for its production as described in the claims herein.

Further characteristics and advantages of the invention are apparent from the detailed description which follows, with reference to the accompanying drawings, which illustrate a preferred embodiment of a hose for conveying fluids by way of example and without limiting the scope of application, and in which:

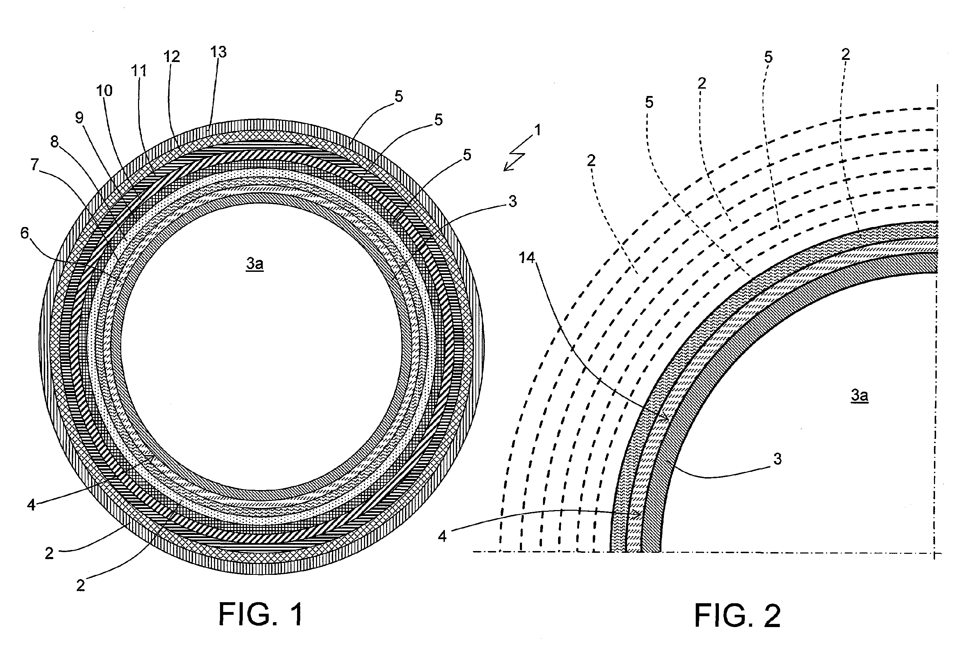

- Figure 1 is a schematic cross-section of a hose for conveying fluids made in accordance with the present invention;
- Figure 2 is an enlarged view of a detail of the hose illustrated in Figure 1, with some parts cut away to better illustrate others.

With reference to the figures, the numeral 1 denotes as a whole a hose for conveying fluids in accordance with the present invention, comprising, in general, a plurality of concentric layers 2, starting with an inner layer 3 which constitutes a duct 3a for the fluid to be conveyed.

The inner layer 3 is made chiefly of a perfluorinated polymer, with the exception of MFA (polytetrafluoroethylene-perfluoromethylvinylether) and PFA (polytetrafluoroethylene-perfluoro(alkoxy vinyl ether)), suitably pigmented, advantageously white or black.

Examples of perfluorinated polymers are: PTFE (polytetrafluoroethylene), FEP (perfluorinated ethylene propylene), ETFE (ethylene tetrafluoroethylene) and PVDF (poly vinylidene fluoride).

The inner layer 3 has an outer surface 4 which, after being subjected to an etching process (described below), is quite "rough". This is described in more detail below.

In the preferred embodiments, the inner layer 3 has a thickness which varies between 0.2 and 0.5 mm for FEP and PVDF, and greater than 0.8 mm for PTFE and ETFE.

At least one protective and reinforcing outer layer 5 is fixed on the outside of the inner layer 3.

An adhesive 6 (normally called a Primer and schematically illustrated in the accompanying figures as another layer, although it usually consists of an extremely thin film which adheres to the outer surface 4 of the inner layer 3) is placed between the outer layer 5 and the inner layer 3, so as to guarantee that they adhere to one another.

In the embodiment illustrated, provided by way of example only, the hose 1 comprises a plurality of concentric outer layers 5.

In particular, starting with the adhesive 6 there is a fabric layer 7, a metal spiral 8, a layer made of filler material 9, another two fabric layers 10, 11, another layer made of filler material 12 and a covering layer 13.

There are many variations in the order of the outer layers 5, each for a specific use.

In particular, for hoses intended for the pharmaceutical and cosmetics sector, for example, the covering layer 13 has a light colour (preferably white), and the other layers 2 must also have a colour which is as light as possible.

For some types of hoses, at least one of the other layers 2 forming the hose 1 must also be conductive, to discharge any electrostatic charges. This measure is particularly necessary when either the fluid conveyed or the environment around the hose 1 are easily inflammable or even explosive.

Another variation is that of hoses 1 intended for dynamic applications (e.g.: with moving filling heads of filling machines). In this case the hose 1 is made in such a way as to maximise its flexibility. To this end, the thickness of the inner layer 3 is reduced and any stiffening spirals are also reduced to a minimum.

The present invention also relates to hoses 1 in which the inner layer 3 is completely pigmented, and hoses 1 in which the inner layer 3 comprises both pigmented zones and non-pigmented zones (solution not illustrated), as well as hoses 1 in which the inner layer 3 comprises various zones with at least two different pigments (solution not illustrated).

As indicated, the present invention also relates to a method for the production of hoses for conveying fluids, of the type described above.

To produce a hose 1 one starts with a preformed duct 3a (e.g.: extruded) made of one of the perfluorinated materials indicated above, of the required thickness.

The outer surface 4 of the duct 3a is thoroughly cleaned then subjected to an etching process which at least partially defluorinates the outer surface 4.

According to the preferred embodiment of the present invention, etching of the outer surface 4 is achieved by immersing the outer surface 4 in a sodium and ammonia based bath for a predetermined time and at a predetermined temperature.

The concentration of the bath, as well as the temperature and duration must be defined on each occasion according to the composition of the material which forms the inner layer 3, the dimensions of the hose 1 and the degree of etching required.

The strength of the adhesive 6 grip on the inner layer 3 depends on the degree of etching. For this reason, the degree of etching must be defined according to the use for which the hose 1 is intended.

More or less strong adhesion between the outer layers 2 and the inner layer is required, depending on the mechanical stresses the hose 1 will be subject to during use.

However, in a preferred embodiment, the temperature of the etching process is between -50°C and -30°C, although advantageously it is -40°C.

After the required time, the inner duct 3a is removed from the bath, washed with cold water and left to dry.

Following this step, the defluorinated outer surface 4 is quite "rough" (at molecular level).

It should be noticed that the products needed for etching (sodium and ammonia) are relatively easy to find.

The second step for production of the hose 1 involves the application on the outer surface 4 of a substance (known as a Primer in the sector) which acts as an adhesive 6 and which adheres to the outer surface 4 of the inner duct 3a, thanks to the latter's "roughness". In particular, the adhesive 6 binds to the outer surface 4 at the molecular gaps left by the fluorine atoms extracted by means of the etching process.

The outer surface 4 is then covered with at least one outer layer 5, although there is normally a plurality of outer layers 5, the first of which is secured in place by the adhesive substance 6.

The layers 2 after the first are then applied in succession one on top of another using known methods.

The present invention brings important advantages.

Firstly, the multi-layer hoses produced as disclosed by the present invention have, on one hand, chemical resistance substantially corresponding to that of conventional hoses, and on the other hand, with the same mechanical strength, they are thinner than conventional hoses, meaning that there are great advantages in terms of flexibility and weight. Moreover, they also adapt to those sectors in which pigmentation of the inner duct is required.

Their great flexibility also allows these hoses to be used to join parts of apparatuses in reciprocal motion.

The invention described can be subject to modifications and variations without thereby departing from the scope of the inventive concept which characterises it.

All the details of the invention may be substituted by technically equivalent elements and the various components may have any shapes and dimensions according to requirements.

## Claims

1. A hose for conveying fluids comprising a plurality of concentric layers (2), an inner layer (3) constituting a duct (3a) for a fluid to be conveyed, and at least one protective and reinforcing outer layer (5) mounted on the outside of the inner layer (3), the hose being **characterised in that** the inner layer (3) is chiefly made of a perfluorinated polymer, with the exception of MFA and PFA, and is at least partly pigmented.

2. The hose according to claim 1, **characterised in that** the inner layer (3) has a white pigment.

3. The hose according to claim 1 or 2, **characterised in that** it also comprises at least one adhesive (6) placed between the outer layer (5) and the inner layer (3).

4. The hose according to any of the foregoing claims, **characterised in that** it comprises a plurality of concentric outer layers (2).

5. The hose according to claim 4, **characterised in that** at least one of the outer layers (2) consists of a metal stiffening spiral.

6. The hose according to claim 4 or 5, **characterised in that** at least one of the layers (2) is conductive.

7. The hose according to any of the foregoing claims, **characterised in that** the inner layer (3) comprises at least a first pigmented zone, and at least a second non-pigmented zone.

8. The hose according to any of the foregoing claims, **characterised in that** the inner layer (3) comprises at least one zone with a first pigment, and at least one zone with a second pigment which is different to the first pigment.

9. The hose according to any of the claims from 1 to 6 **characterised in that** the inner layer (3) is completely pigmented.

10. A method for the production of hoses for conveying fluids, consisting of an inner layer (3), made chiefly of a perfluorinated material, with the exception of MFA and PFA, the perfluorinated material being at least partly pigmented, and forming a duct (3a) for a fluid to be conveyed, and consisting of at least one protective and reinforcing outer layer (5) mounted on the outside of the inner layer (3), the method being **characterised in that** it comprises the following operating steps:
- subjecting an outer surface (4) of the inner layer (3) to an etching process;
- then applying an adhesive (6) to the outer surface (4); and
- covering the outer surface (4) with at least one outer layer (5).

11. The method according to claim 10, **characterised in that** the etching process occurs by at least partial defluorination of the outer surface (4) of the inner layer (3).

12. The method according to claim 10 or 11, **characterised in that** the etching process occurs by immersing the outer surface (4) of the inner layer (3) in a sodium and ammonia based bath.

13. The method according to claim 12, **characterised in that** after immersion in the bath, the outer surface (4) of the inner layer (3) is removed from the bath and washed.

14. The method according to claim 13, **characterised in that** the outer surface (4) is washed with cold water.

15. The method according to claim 13 or 14, **characterised in that** after being washed the outer surface (4) is left to dry.

16. The method according to any of the claims from 10 to 15, **characterised in that** the etching process takes place at a temperature between -50°C and - 30°C.

17. The method according to claim 16, **characterised in that** the etching process takes place at a temperature of around -40°C.

18. The method according to any of the claims from 10 to 17, **characterised in that** the outer surface (4) is cleaned before it is subjected to the etching process.
